# EUROPEAN PATENT APPLICATION

(11) **EP 4 282 562 A1**
(43) Date of publication of application: **29.11.2023**
(21) Application number: 21921346.9
(22) Date of filing: 23.12.2021
(51) Int. Cl.: B23B 19/02, F16C 19/16, F16C 19/56, F16C 35/12

(54) **BEARING DEVICE AND SPINDLE DEVICE FOR MACHINE TOOL**

(30) Priority: 22.01.2021 JP 2021008787
(71) Applicant: NSK Ltd., Tokyo 141-8560 (JP)
(72) Inventor: OGURI, Shoichiro, Fujisawa-shi, Kanagawa 252-0811 (JP); INAGAKI, Yoshifumi, Fujisawa-shi, Kanagawa 252-0811 (JP)
(74) Representative: Grünecker Patent- und Rechtsanwälte PartG mbB
(86) International application number: PCT/JP2021/047960
(87) International publication number: WO 2022/158245

(57) **Abstract**

Provided are a bearing device and a main spindle device for a machine tool capable of achieving both high load capacity and high speed rotation. The bearing device has a plurality of angular contact ball bearings (41, 42, 43, 44) arranged in a back-to-back combination in an axial direction, and receives a load from one side thereof in the axial direction. Ball diameters (Da41, Da42) of the angular contact ball bearings on a load side (41, 42) are larger than ball diameters (Da43, Da44) of the angular contact ball bearings on an anti-load side (43, 44).

## Description

### TECHNICAL FIELD

The present invention relates to a bearing device and a for a machine tool, and more particularly to a bearing device applied to a main spindle of a machine tool, a high-speed motor, or a rotating machine rotating at high speed, such as a centrifuge and a turbo refrigerator, and a main spindle device for the machine tool including the bearing device.

### BACKGROUND ART

As a main spindle device used in a machining center, a device having a plurality of bearings disposed in a back-to-back combination on the blade side (load side) is often used. In general, bearings having the same inner and outer diameters and the same ball diameter are used.

However, arrangement of the bearings having the same inner and outer diameters and the same ball diameter may limit usage conditions. For example, a combination of bearings having large ball diameters can provide high load capacity. However, since the ball diameter is large, centrifugal force acting on a revolving ball becomes large during high speed rotation, which causes an increase in internal (pre-load) load of a bearing. Therefore, a PV value (P: contact surface pressure, V: sliding speed) of a rolling contact part is increased, which causes high heat generation in a high speed region. As a result, the internal (pre-load) load of the bearing is further increased, which may lead to early damage such as burning. Therefore, it is necessary to limit the number of revolutions so that the bearing does not enter an abnormally high temperature state due to high heat generation.

In addition, in the case of a main spindle device of a built-in motor type, since a bearing disposed near a motor is affected by heat from the motor, the bearing is more likely to enter the high temperature state, and as such the number of revolutions is further limited.

On the other hand, in the case of a bearing having a small ball diameter, since centrifugal force acting on a ball is small, heat generation is suppressed, and as such the bearing can be used even at high speed rotation. However, since the ball diameter is small, load capacity may be lower than that of a bearing having a large ball diameter.

In a main spindle device disclosed in Patent Literature 1, it is described that two or more rows of angular contact ball bearings having the same contact angle direction are arranged in a back-to-back combination, and outer diameter dimensions of a plurality of angular contact ball bearings having different contact angle directions are caused to be different. In each angular contact ball bearing having a large outer diameter dimension, the ball diameter and contact angle of the angular contact ball bearing located outside the axial direction are formed to be larger than those of the angular contact ball bearing located inside the axial direction. Accordingly, an angular contact ball bearing having a large outer diameter dimension is disposed on the blade side to which a cutting load is applied, thereby achieving high-precision machining by increasing main spindle rigidity (moment rigidity and axial rigidity), increasing bearing fatigue life, and improving seizure resistance.

Further, in Patent Literature 1, it is described that, in a main spindle device of a built-in motor type, an angular contact ball bearing having a large outer diameter dimension (anti-motor side bearing) is disposed farther apart from a built-in motor than an angular contact ball bearing having a small outer diameter dimension (motor side bearing), and as such an angular contact ball bearing on the motor side, which is likely to be affected by thermal load due to heat generated by a rotor, can be prevented from burning even during high speed rotation thereof.

### CITATION LIST

### PATENT LITERATURE

Patent Literature 1: JP2017-030122A

### SUMMARY OF INVENTION

### TECHNICAL PROBLEM

Meanwhile, in recent years, efforts have been made to reduce CO₂ emissions worldwide. In the future, it is expected that there will be increasing demand on weight reduction of an air frame for the purpose of reducing fuel consumption of an aircraft and the spread of an electric vehicle (EV) and a hybrid vehicle.

Further, it is thought that the usage rate of aluminum alloys, titanium alloys, and composite materials used for the air frame, the EV, and hybrid vehicle will also increase. These materials are referred to as hard-to-cut materials. Since these materials put a heavy load on a main spindle when machining is performed with a machine tool, it is expected to require a main spindle having high load capacity in the future.

Furthermore, for the purpose of improving production efficiency, a machine configured to combine various types of processing other than cutting work, such as laser processing and friction-stirring joining, with a cutting machine based on "process integration" has begun to be released. Particularly, in the case of friction-stirring joining, members are melted and integrated at low speed rotation while a tip portion of a main spindle is pressed against the members with a very heavy axial load. A load of 1 ton or more may be applied to a bearing that supports the load in the axial direction.

In addition, in order to further improve production efficiency, it is desirable to use one machine capable of performing rough machining by low speed rotation and finish machining by high speed rotation. Particularly, regarding aluminum alloys having a possibility of increasing a usage rate, it is known that, as machining is performed at high speed rotation, cutting resistance and finished surface roughness are reduced and machining accuracy is improved. In this manner, a main spindle for a machine tool also requires high-speed performance.

Therefore, both high load capacity performance and high-speed performance will be important for a main spindle in the future, and it is thought that combination of these performances is applied to complex processing and the combination contributes to process integration.

The present invention has been made in view of the above-described problems, and it is an object of the present invention to provide a bearing device and a main spindle device for a machine tool capable of achieving both high load capacity and high speed rotation.

### SOLUTION TO PROBLEM

As described above, the following matters are disclosed in this specification.
(1) A bearing device having a plurality of angular contact ball bearings arranged in a back-to-back combination in an axial direction, the bearing device receiving a load from one side thereof in the axial direction, in which a ball diameter of each of the angular contact ball bearings on a load side is larger than a ball diameter of each of the angular contact ball bearings on an anti-load side, in which, on the load side, an intersection between an action line of a contact angle and an axial line of the angular contact ball bearing becomes one side of the angular contact ball bearings in the axial direction, and, on the anti-load side, the intersection becomes the other side of the angular contact ball bearings in the axial direction.
(2) The bearing device according to (1), in which the angular contact ball bearing on the load side has a bearing cross-sectional height larger than a bearing cross-sectional height of the angular contact ball bearing on the anti-load side.
(3) The bearing device according to (1) or (2), in which an outer ring spacer is disposed between an outer ring of the angular contact ball bearing on the load side and an outer ring of the angular contact ball bearing on the anti-load side.
(4) The bearing device according to (1) or (2), in which an outer ring of the angular contact ball bearing on the load side and an outer ring of the angular contact ball bearing on the anti-load side are disposed so as to allow axial end surfaces of the outer rings to contact each other.
(5) The bearing device according to any one of (1) to (4), in which:
   at least one of the angular contact ball bearing on the load side and the angular contact ball bearing on the anti-load side has two or more rows of the angular contact ball bearings; and
   outer rings of the two or more rows of the angular contact ball bearings are disposed so as to allow axial end surfaces of the outer rings to contact each other.
(6) A main spindle device for a machine tool, the main spindle device having a main spindle rotatably supported in a housing through a front side bearing and a rear side bearing,
   in which the front side bearing is configured by the bearing device according to any one of (1) to (5).
(7) The main spindle device for a machine tool according to (6), in which:
   the angular contact ball bearing on the load side has an outer diameter dimension larger than an outer diameter dimension of the angular contact ball bearing on the anti-load side;
   the housing has an axial end surface formed between a large-diameter inner peripheral surface and a small-diameter inner peripheral surface, in which the large-diameter inner peripheral surface has the outer ring of the angular contact ball bearing on the load side internally fitted thereto, and the small-diameter inner peripheral surface has the outer ring of the angular contact ball bearing on the anti-load side internally fitted thereto; and
   the housing is positioned at and fixed to the front side bearing in a state in which the axial end surface of the outer ring of the angular contact ball bearing on the load side, or an axial end surface of the outer ring spacer disposed between the outer ring of the angular contact ball bearing on the load side and the outer ring of the angular contact ball bearing on the anti-load side, and the axial end surface of the housing are in contact with each other.
(8) The main spindle device for a machine tool according to (6), in which:
   the angular contact ball bearing on the load side has an outer diameter dimension larger than an outer diameter dimension of the angular contact ball bearing on the anti-load side;
   the housing has an axial end surface formed between a large-diameter inner peripheral surface and a small-diameter inner peripheral surface, in which the large-diameter inner peripheral surface has the outer ring of the angular contact ball bearing on the load side internally fitted thereto, and the small-diameter inner peripheral surface has the outer ring of the angular contact ball bearing on the anti-load side internally fitted thereto; and
   the housing is positioned at and fixed to the front side bearing in a state in which an axial gap is provided between the axial end surface of the outer ring of the angular contact ball bearing on the load side, or an axial end surface of the outer ring spacer disposed between the outer ring of the angular contact ball bearing on the load side and the outer ring of the angular contact ball bearing on the anti-load side, and the axial end surface of the housing.
(9) The main spindle device for a machine tool according to any one of (6) to (8), in which:
   the main spindle is rotationally driven by a built-in motor; and
   the angular contact ball bearing on the anti-load side is located closer to the built-in motor than the angular contact ball bearing on the load side.

### ADVANTAGEOUS EFFECTS OF INVENTION

According to a bearing device and a main spindle device for a machine tool of the present invention, both high load capacity and high speed rotation can be achieved.

### BRIEF DESCRIPTION OF DRAWINGS

Fig. 1 is a half cross-sectional view of a main spindle device for a machine tool according to a first embodiment of the present invention.
Fig. 2 is an enlarged view of a portion II in Fig. 1.
Fig. 3 is a cross-sectional view showing a bearing device applied as a front side bearing in Fig. 1.
Fig. 4 is a cross-sectional view of a main part of a main spindle device for a machine tool according to a second embodiment of the present invention.
Fig. 5 is a cross-sectional view of a main part of a main spindle device for a machine tool according to a third embodiment of the present invention.
Fig. 6 is a cross-sectional view of a main part of a main spindle device for a machine tool according to a first modification of the third embodiment of the present invention.
Fig. 7 is a cross-sectional view of a main part of a main spindle device for a machine tool according to a second modification of the third embodiment of the present invention.
Fig. 8 is a cross-sectional view of a main part of a main spindle device for a machine tool according to a third modification of the third embodiment of the present invention.
Fig. 9 is a cross-sectional view of a main part of a main spindle device for a machine tool according to a fourth modification of the third embodiment of the present invention.

### DESCRIPTION OF EMBODIMENTS

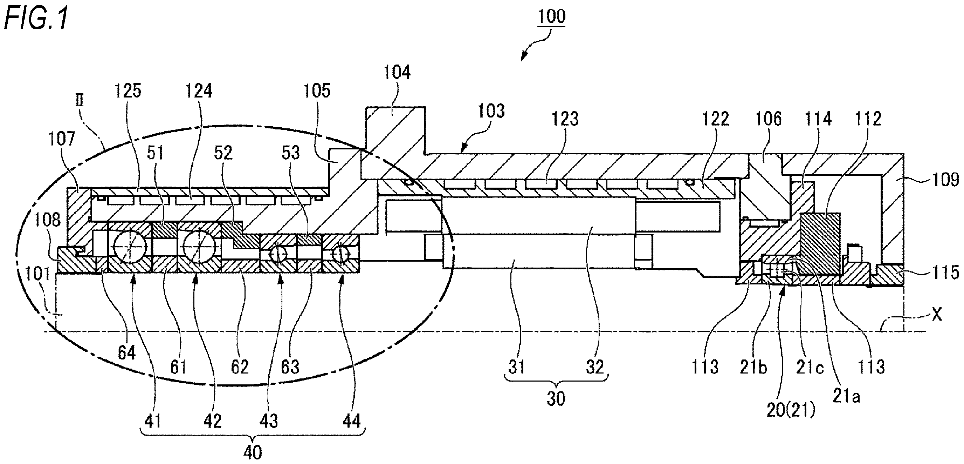

Hereinafter, as a bearing device according to the present invention, each embodiment of a main spindle device for a machine tool will be described in detail with reference to the drawings. In Fig. 1, the left side in the drawing is defined as the front side (one side in the axial direction), and the right side in the drawing is defined as the rear side (the other side in the axial direction).

### (First embodiment)

As shown in Fig. 1, a main spindle device for a machine tool 100 of the present embodiment is a main spindle device of a built-in motor type. A main spindle 101 is rotatably supported in a housing 103 by a front side bearing 40 and a rear side bearing 20, and is rotationally driven by a built-in motor 30.

It is noted that, although the inside of the main spindle 101 is not shown, the main spindle 101 has a blade holder detachably fixed to the front end side thereof and configured to allow a blade to be attached thereto, and the front end side of the main spindle 101 becomes the load side.

The housing 103 includes a housing main body 104, a front side bearing housing 105 internally fitted and fixed to the front end portion (left end portion in the drawing) of the housing main body 104, and a rear side bearing housing 106 internally fitted and fixed to the rear end portion (right end portion in the drawing) of the housing main body 104. An outer ring pressing member 107 is provided at the front end portion of the front side bearing housing 105, and a labyrinth seal is formed between the outer ring pressing member 107 and an inner ring pressing member (nut) 108 coupled to the main spindle 101. A rear end portion of the housing 103 is covered with a cover 109. A sleeve 114 that supports the rear side bearing 20 is internally fitted to the rear side bearing housing 106.

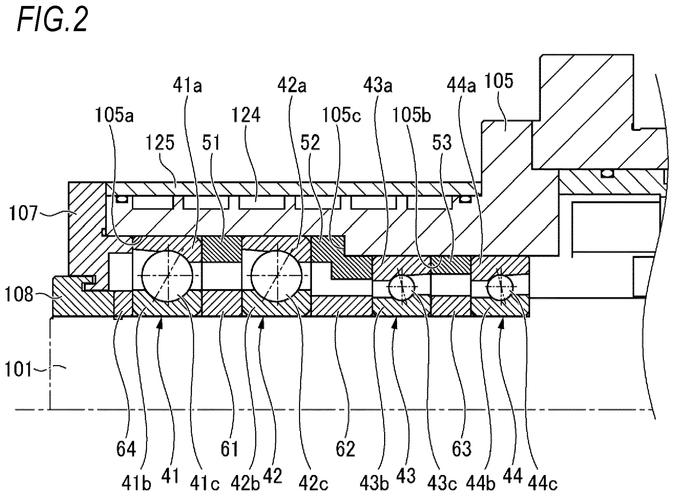

As also shown in Fig. 2, the front side bearing 40 includes four rows of angular contact ball bearings 41, 42, 43, and 44 disposed between the front side bearing housing 105 and the front portion of the main spindle 101. That is, the front side bearing 40 includes the angular contact ball bearings on the load side (hereinafter also referred to as "load side bearings") 41 and 42 having the same contact angle direction and the angular contact ball bearings on the anti-load side (hereinafter also referred to as "anti-load side bearings") 43 and 44 having contact angle directions different from those of the load side bearings 41 and 42.

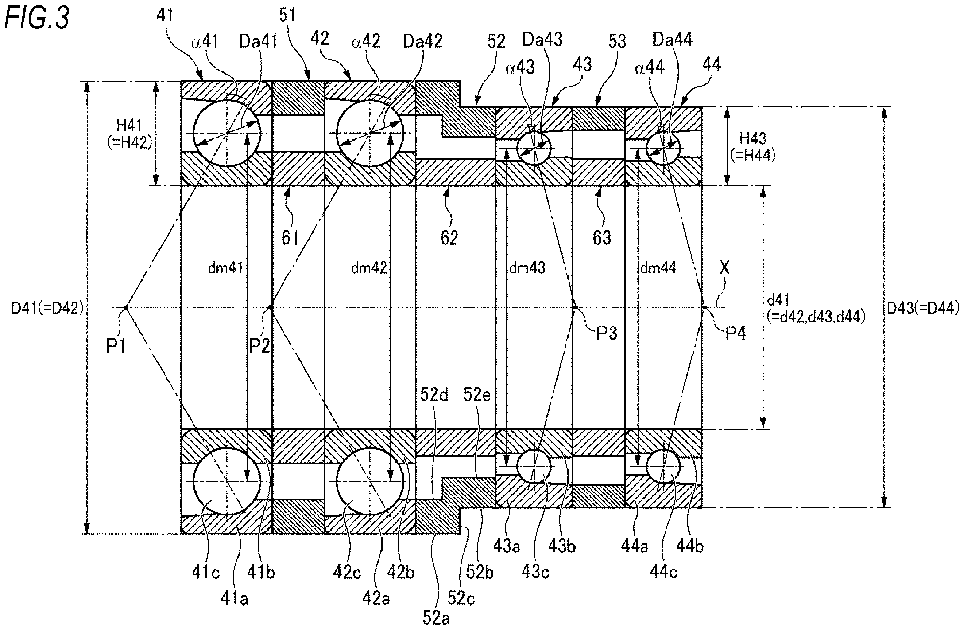

Referring to Fig. 3, the angular contact ball bearings 41, 42, 43, and 44 respectively include outer rings 41a, 42a, 43a, and 44a internally fitted to the front side bearing housing 105, inner rings 41b, 42b, 43b, and 44b externally fitted to the front portion of the main spindle 101, and a plurality of balls 41c, 42c, 43c, and 44c respectively disposed to be rollable with contact angles α41 to α44 between the outer rings 41a, 42a, 43a, and 44a and the inner rings 41b, 42b, 43b, and 44b. In the load side bearings 41 and 42, the contact angles α41 and α42 are designed so that intersections P 1 and P2 between action lines of the contact angles α41 and α42 and axial lines X of the load side bearings 41 and 42 become one axial side (load side) with respect to the load side bearings 41 and 42. On the other hand, in the anti-load side bearings 43 and 44, the contact angles α43 and α44 are designed so that intersections P3 and P4 between action lines of the contact angles α43 and α44 and axial lines X of the anti-load side bearings 43 and 44 become the other axial side (anti-load side) with respect to the anti-load side bearings 43 and 44. That is, in the four rows of angular contact ball bearings 41, 42, 43, and 44, the load side bearings 41 and 42 and the anti-load side bearings 43 and 44 are disposed in the axial direction in a back-to-back combination.

Outer ring spacers 51, 52, and 53 are disposed between the outer rings 41a, 42a, 43a, and 44a of the four angular contact ball bearings 41, 42, 43, and 44, and by fixing the outer ring pressing member 107 to the front side bearing housing 105, each of the outer rings 41a, 42a, 43a, and 44a is positioned at and fixed to the front side bearing housing 105. Further, inner ring spacers 61, 62, and 63 are disposed between the inner rings 41b, 42b, 43b, and 44b, and by coupling the inner ring pressing member 108 to the main spindle 101 via an inner ring spacer 64, each of the inner rings 41b, 42b, 43b, and 44b is positioned at and fixed to the main spindle 101. As a result, a fixed position pre-load is applied to each of the angular contact ball bearings 41, 42, 43, and 44.

Further, the rear side bearing 20 is a cylindrical roller bearing 21, and includes an outer ring 21a that internally fits to the sleeve 114, an inner ring 21b externally fitted to the rear portion of the main spindle 101, and a plurality of rollers 21c configured to serve as rolling bodies and disposed to be rollable between the outer ring 21a and the inner ring 21b.

An outer ring pressing member 112 is also disposed on the rear side of the outer ring 21a of the cylindrical roller bearing 21, and by fixing the outer ring pressing member 112 to the sleeve 114, the outer ring 21a is positioned at and fixed to the sleeve 114. Inner ring spacers 113 are disposed on the opposite sides of the inner ring 21b in the axial direction, and by coupling a nut 115 to the main spindle 101, the inner ring 21b is positioned at and fixed to the main spindle 101.

Referring back to Fig. 1, the main spindle device 100 incorporates the built-in motor 30 formed of a rotor 31 and a stator 32. The rotor 31 is externally fitted and fixed to an approximately central portion of the main spindle 101 in the axial direction. The stator 32 is coaxially disposed on the outer peripheral surface side of the rotor 31 at a predetermined distance. The stator 32 is fixed to the housing main body 104 via a stator fixing member 122 disposed on the outer peripheral surface side of the stator 32. A plurality of grooves 123 are formed along the circumferential direction of the main spindle 101 between the housing main body 104 and the stator fixing member 122. A refrigerant for cooling the stator 32 flows through the plurality of grooves 123.

Similarly, a plurality of grooves 124, each of which has a refrigerant configured to cool a housing and a bearing and to flow therethrough, are formed in a portion corresponding to the outer peripheral side of the front side bearing 40, and the grooves 124 are disposed between the front side bearing housing 105 and a cooling sleeve 125 externally fitted to the housing 105. The plurality of grooves 124 are formed on the outer peripheral surface of the front side bearing housing 105 in the circumferential direction.

It is noted that the front side and rear side bearings 40 and 20 are lubricated with grease, and may be replenished with grease through, for example, a supply path (not shown) formed in the housing 103.

Here, as shown in Fig. 3, in the front side bearing 40, ball diameters Da41 and Da42 of the load side bearings 41 and 42 are larger than ball diameters Da43 and Da44 of the anti-load side bearings 43 and 44 ((Da41, Da42) > (Da43, Da44)). In other words, a bearing having a large ball diameter is used at a portion to which a high load on the blade side is applied in order to improve rigidity of a main spindle. Further, since the bearing is relatively unlikely to be affected by thermal effects of a motor, even if the ball diameter is increased and the bearing rotates at high speed, the overall amount of heat generated by the bearing can be suppressed to a certain extent. On the other hand, since a load on the anti-load side bearings 43 and 44 is small, even if a bearing having a small ball diameter is used, there is no problem in terms of rigidity of the bearing. In addition, although a bearing is located near the built-in motor 30 where the bearing is easily affected by heat of the motor, the overall amount of heat generated by the bearing can be suppressed because the ball diameter of the bearing is small. Therefore, it is possible to obtain a configuration in which both high load capacity and high speed performance can be achieved.

In addition, in the present embodiment, the ball diameters Da41 and Da42 of the load side bearings 41 and 42 are equal to each other. The ball diameters Da43 and Da44 of the anti-load side bearings 43 and 44 are also equal to each other.

Furthermore, bearing cross-sectional heights H41 and H42 of the load side bearings 41 and 42 are larger than bearing cross-sectional heights H43 and H44 of the anti-load side bearings 43 and 44 ((H41, H42) > (H43, H44)). That is, the load side bearings 41 and 42 and the anti-load side bearings 43 and 44 have inner diameter dimensions equal to each other (d41 = d42 = d43 = d44). Further, outer diameter dimensions D41 and D42 of the load side bearings 41 and 42 having the same contact angle direction are larger than outer diameter dimensions D43 and D44 of the anti-load side bearings 43 and 44 having the same contact angle direction ((D41, D42) > (D43, D44)).

The load side bearings 41 and 42, the contact angle directions of which are the same, and the anti-load side bearings 43 and 44, the contact angle directions of which are the same, respectively have the same outer diameter dimensions (D41 = D42, D43 = D44).

Further, in the present embodiment, the contact angles α41 and α42 of the load side bearings 41 and 42 are larger than the contact angles α43 and α44 of the anti-load side bearings 43 and 44 ((α41, α42) > (α43, α44)). Additionally, ball pitch circular diameters dm41 and dm42 of the load side bearings 41 and 42 are larger than ball pitch circular diameters dm43 and dm44 of the anti-load side bearings 43 and 44 ((dm41, dm42) > (dm43, dm44)).

It is noted that, in the present embodiment, the contact angles α41 and α42 of the load side bearings 41 and 42 are equal to each other. The contact angles α43 and α44 of the anti-load side bearings 43 and 44 are also equal to each other.

Similarly, the ball pitch circular diameters dm41 and dm42 of the load side bearings 41 and 42 are equal to each other. The ball pitch circular diameters dm43 and dm44 of the anti-load side bearings 43 and 44 are also equal to each other.

Additionally, as shown in Fig. 2, in the present embodiment, the front side bearing housing 105 includes a large-diameter inner peripheral surface 105a, the inner peripheral surface of which is internally fitted to the load side bearings 41 and 42, the outer ring spacer 51, and the front side portion of the outer ring spacer 52, a small-diameter inner peripheral surface 105b, the inner peripheral surface of which is internally fitted to the anti-load side bearings 43 and 44, the outer ring spacer 53, and the rear side portion of the outer ring spacer 52, and an axial end surface 105c formed to extend in the radial direction and disposed between the large-diameter inner peripheral surface 105a and the small-diameter inner peripheral surface 105b.

The outer ring spacer 51 between the load side bearings 41 and 42 has the same outer diameter as those of the load side bearings 41 and 42, and the outer ring spacer 53 between the anti-load side bearings 43 and 44 has the same outer diameter as those of the anti-load side bearings 43 and 44. Furthermore, the outer ring spacer 52 between the load side bearing 42 and the anti-load side bearing 43 has a load side outer peripheral surface 52a having the same outer diameter dimension as that of the load side bearing 42, an anti-load side outer peripheral surface 52b having the same outer diameter dimension as that of the outer peripheral surface of the anti-load side bearing 43, and an axial end surface 52c formed to extend in the radial direction and disposed between the load side outer peripheral surface 52a and the anti-load side outer peripheral surface 52b, thereby being formed into a stepped shape.

The inner peripheral surface of the outer ring spacer 52 has a load side inner peripheral surface 52d having an inner diameter approximately equal to the inner peripheral surface of an outer ring shoulder portion of the load side bearing 42 and an anti-load side inner peripheral surface 52e having an inner diameter approximately equal to the inner peripheral surface of an outer ring shoulder portion of the anti-load side bearing 43, thereby being formed into a stepped shape. Therefore, the outer ring spacer 52 is formed into a crank-shaped cross section.

In the outer ring spacer 52 having such a shape, in order to secure rigidity against an axial load such as a pre-load or an unclamping force, the anti-load side outer peripheral surface 52b preferably has a diameter larger than that of the load side inner peripheral surface 52d.

The axial end surface 105c of the front side bearing housing 105 and the axial end surface 52c of the outer ring spacer 52 contact each other, so that the front side bearing 40 is axially positioned at the front side bearing housing 105.

As described above, the axial end surface 105c of the front side bearing housing 105 contacts the axial end surface 52c of the outer ring spacer 52, so that an axial load (an axial load supported by the load side bearings 41 and 42) received from the blade side can be applied to the axial end surface 105c on the housing side, thereby achieving the main spindle device 100 having high load capacity. In addition, since a contact area between the front side bearing 40 and the front side bearing housing 105 is secured, and contact rigidity can be improved, thereby making it possible to improve the axial rigidity of the main spindle device 100.

Further, since the four rows of angular contact ball bearings 41, 42, 43, and 44 are disposed to be spaced apart from each other by disposing the outer ring spacers 51, 52, and 53, and the inner ring spacers 61, 62, and 63 therebetween, heat is easily dispersed, that is, heat transfer characteristics are improved, thereby making it possible to suppress an increase in internal (pre-load) load of a bearing due to temperature rise.

Therefore, the main spindle device for the machine tool 100 of the present embodiment has a configuration suitable for both high efficiency of cutting work at high speed rotation and application to machining of a hard-to-cut material by high load capacity. Furthermore, the main spindle device for the machine tool 100 can be used as a main spindle device for laser processing and friction-stirring joining by its high load capacity, thereby making it possible to realize a versatile main spindle device.

### (Second embodiment)

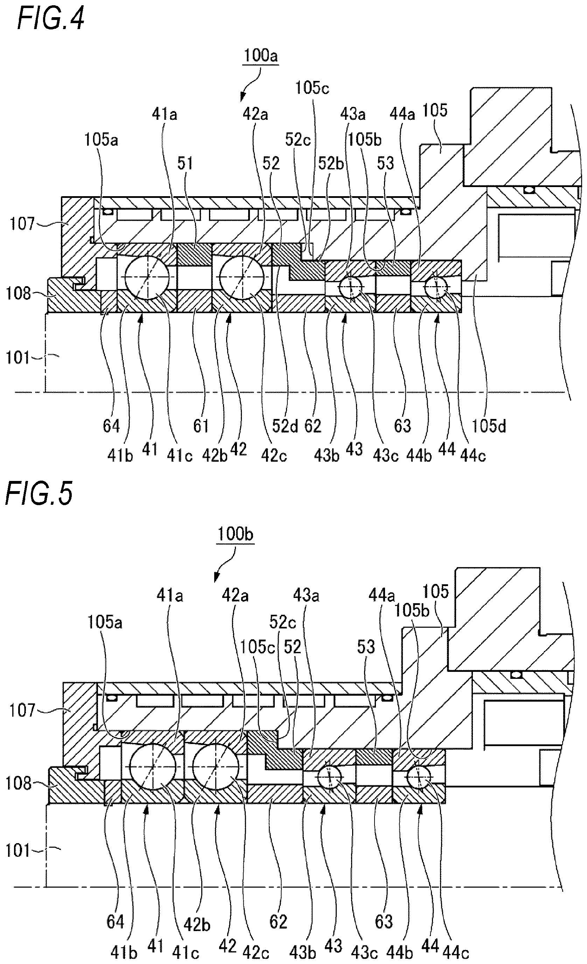

Fig. 4 shows a main spindle device for a machine tool 100a according to a second embodiment of the present invention. In the main spindle device for the machine tool 100a, the outer ring 44a of the anti-load side bearing 44 is brought into contact with an inward flange portion 105d formed at an axial rear end portion of the front side bearing housing 105 to fix the outer ring pressing member 107 in a state in which an axial gap is provided between the axial end surface 105c of the front side bearing housing 105 and the axial end surface 52c of the outer ring spacer 52, thereby allowing the front side bearing housing 105 to be positioned at and fixed to the front side bearing 40.

Accordingly, when an impact load is received from the axial direction, the outer ring spacer 52 is elastically deformed in the axial direction (the outer rings 41a and 42a are temporarily displaced in the axial direction) to absorb the impact load, thereby making it possible to reduce damage to the front side bearing 40. Particularly, in the present embodiment, it is assumed that an impact load is received from the axial direction, and the anti-load side outer peripheral surface 52b preferably has a larger diameter than that of the load side inner peripheral surface 52d to secure bearing rigidity against an axial load.

In the present embodiment, the inward flange portion 105d of the front side bearing housing 105 is brought into contact with the outer ring 44b of the anti-load side bearing 44, thereby allowing an axial load received from the blade side to be applied to the inward flange portion 105d on the housing side via the outer rings 43a and 44a of the anti-load side bearings 43 and 44 and the outer ring spacers 52 and 53. Further, a contact area between the front side bearing 40 and the front side bearing housing 105 is secured, and contact rigidity can be improved, thereby making it possible to improve axial rigidity of the main spindle device 100a.

In the present embodiment as well, the outer ring spacers 51, 52, and 53, and the inner ring spacers 61, 62, and 63 are disposed between the four rows of angular contact ball bearings 41, 42, 43, and 44. Accordingly, the angular contact ball bearings 41, 42, 43, and 44 are disposed to be spaced apart from each other, and as such heat is easily dispersed, that is, heat transfer characteristics are improved, thereby making it possible to suppress an increase in internal (pre-load) load of a bearing due to temperature rise.

Other configurations and actions are the same as those of the first embodiment.

### (Third embodiment)

Fig. 5 shows a main spindle device for a machine tool 100b according to a third embodiment of the present invention. An outer ring spacer and an inner ring spacer are not provided between the load side bearings 41 and 42 in the main spindle device for the machine tool 100b. That is, the outer rings 41a and 42a of the load side bearings 41 and 42 and the inner rings 41b and 42b thereof are disposed so that the axial end surfaces thereof are in contact with each other.

As a result, in the main spindle device 100b, the main spindle 101 can be made shorter, thereby making it possible to achieve more compact device. Further, the number of parts can be reduced by the number of outer ring spacers and inner ring spacers, and costs can be reduced. Additionally, the load side bearings 41 and 42 can share lubricants (base oil) adhering to the sides of the outer rings 41a and 42a, thereby improving lubrication performance.

Other configurations and actions are the same as those of the first embodiment.

It is noted that a portion at which an outer ring spacer and an inner ring spacer are not provided is not limited to a portion between the load side bearings 41 and 42 shown in Fig. 5, and the portion may also be provided between other angular contact ball bearings 41, 42, 43, and 44.

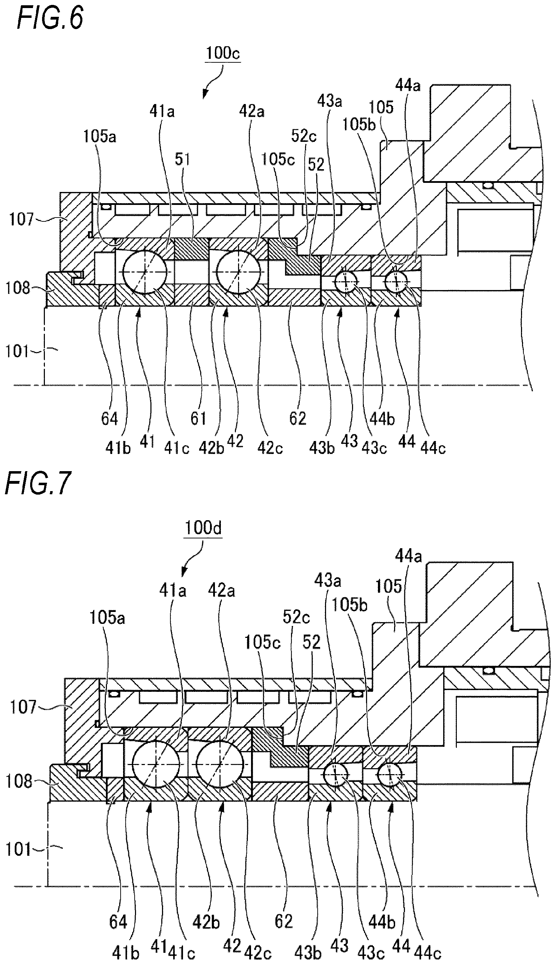

Specifically, Fig. 6 shows a main spindle device for a machine tool 100c according to a first modification of the third embodiment of the present invention. In the main spindle device for the machine tool 100c, an outer ring spacer and an inner ring spacer are not provided between the anti-load side bearings 43 and 44. That is, the outer rings 43a and 44a of the anti-load side bearings 43 and 44 and the inner rings 43b and 44b thereof are disposed so that the axial end surfaces thereof are in contact with each other.

In this case as well, in the main spindle device 100c, the main spindle 101 can be made shorter, thereby making it possible to achieve more compact device. Further, the number of parts can be reduced by the number of outer ring spacers and inner ring spacers, and costs can be reduced. Additionally, the anti-load side bearings 43 and 44 can share lubricants (base oil) adhering to the sides of the outer rings 43a and 44a.

Fig. 7 shows a main spindle device for a machine tool 100d according to a second modification of the third embodiment of the present invention. In the main spindle device for the machine tool 100d, an outer ring spacer and an inner ring spacer are not provided between the load side bearings 41 and 42 and between the anti-load side bearings 43 and 44. That is, the outer rings 41a and 42a of the load side bearings 41 and 42 and the inner rings 41b and 42b thereof are disposed so that the axial end surfaces thereof are in contact with each other. Further, the outer rings 43a and 44a of the anti-load side bearings 43 and 44 and the inner rings 43b and 44b thereof are disposed so that the axial end surfaces thereof are in contact with each other.

In this case as well, in the main spindle device 100d, the main spindle 101 can be made shorter, thereby making it possible to achieve more compact device. Further, the number of parts can be reduced by the number of outer ring spacers and inner ring spacers, and costs can be reduced. Furthermore, the load side bearings 41 and 42 can share lubricants (base oil) adhering to the sides of the outer rings 41a and 42a. Additionally, the anti-load side bearings 43 and 44 can share lubricants (base oil) adhering to the sides of the outer rings 43a and 44a.

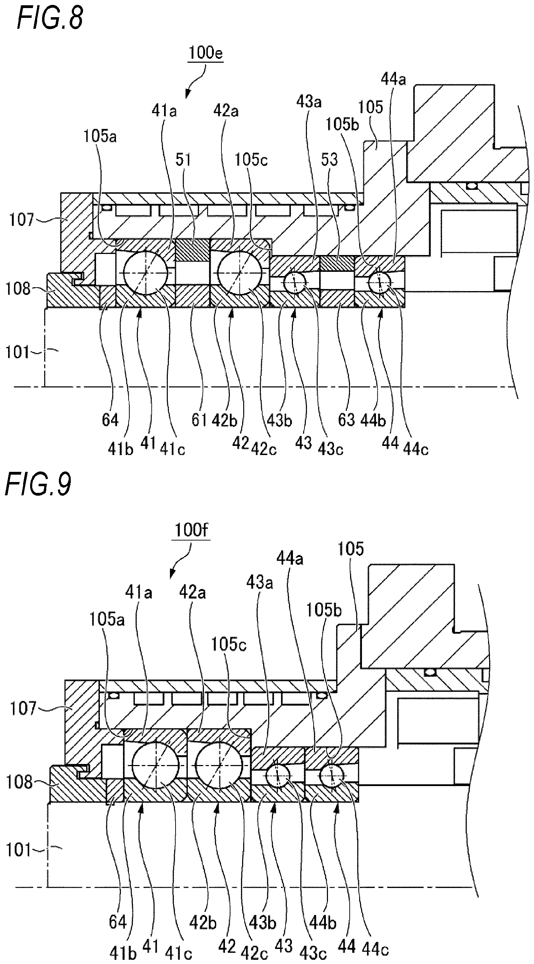

Fig. 8 shows a main spindle device for a machine tool 100e according to a third modification of the third embodiment of the present invention. In the main spindle device for the machine tool 100e, an outer ring spacer and an inner ring spacer are not provided between the load side bearing 42 and the anti-load side bearing 43. That is, the outer rings 42a and 43a of the load side bearing 42 and the anti-load side bearing 43 and the inner rings 42b and 43b thereof are disposed so that the axial end surfaces thereof are in contact with each other.

In this case as well, in the main spindle device 100e, the main spindle 101 can be made shorter, thereby making it possible to achieve more compact device. Further, the number of parts can be reduced by the number of outer ring spacers and inner ring spacers, and costs can be reduced. Additionally, the load side bearing 42 and the anti-load side bearing 43 can share lubricants (base oil) adhering to the sides of the outer rings 42a and 43 a.

Fig. 9 shows a main spindle device for a machine tool 100f according to a fourth modification of the third embodiment of the present invention. In the main spindle device for the machine tool 100f, an outer ring spacer and an inner ring spacer are not provided between the load side bearings 41 and 42, between the anti-load side bearings 43 and 44, and between the load side bearing 42 and the anti-load side bearing 43. That is, the outer rings 41a and 42a of the load side bearings 41 and 42 and the inner rings 41b and 42b thereof are disposed so that the axial end surfaces thereof are in contact with each other. Further, the outer rings 43a and 44a of the anti-load side bearings 43 and 44 and the inner rings 43b and 44b thereof are disposed so that the axial end surfaces thereof are in contact with each other. Further, the outer rings 42a and 43a of the load side bearing 42 and the anti-load side bearing 43 and the inner rings 42b and 43b thereof are also disposed so that the axial end surfaces thereof are in contact with each other.

In this case as well, in the main spindle device 100f, the main spindle 101 can be made shorter, thereby making it possible to achieve more compact device. Further, the number of parts can be reduced by the number of outer ring spacers and inner ring spacers, and costs can be reduced. Furthermore, the four angular contact ball bearings 41, 42, 43, and 44 can share lubricants (base oil) adhering to the sides of the outer rings 41a, 42a, 43a, and 44a.

Additionally, the configurations of the front side bearing 40 of the third embodiment and the first to fourth modifications can also be applied to the main spindle device 100a of the second embodiment.

It is noted that the present invention is not limited to the above-described embodiments and modifications, and other modifications, improvements, and the like can be made as appropriate.

For example, in the above-described embodiments, although the bearing device of the present invention has been described using the main spindle device for the machine tool, the bearing device of the present invention can also be applied to a main spindle device that supports a main spindle for a high-speed motor such as an AC servomotor.

Further, in the above-described embodiments, although two rows of load side bearings and two rows of anti-load side bearings have been described, the present invention is not limited thereto, and may be formed of at least two or more rows of angular contact ball bearings having one or more rows of load side bearings and one or more rows of anti-load side bearings.

This application is based upon Japanese Patent Application No. 2021-8787, filed on January 22, 2021, the contents of which are incorporated herein by reference.

### REFERENCE SIGNS LIST

21: cylindrical roller bearing
21a, 41a, 42a, 43a, 44a: outer ring
21b, 41a, 42b, 43b, 44b: inner ring
21c: cylindrical roller
40: angular contact ball bearing
41, 42: angular contact ball bearing on load side
41c, 42c, 43c, 44c: ball
43, 44: angular contact ball bearing on anti-load side
100, 100a to 100f: main spindle device
101: main spindle
103: housing

## Claims

1. A bearing device having a plurality of angular contact ball bearings arranged in a back-to-back combination in an axial direction, the bearing device receiving a load from one side thereof in the axial direction,
wherein a ball diameter of each of the angular contact ball bearings on a load side is larger than a ball diameter of each of the angular contact ball bearings on an anti-load side, wherein, on the load side, an intersection between an action line of a contact angle and an axial line of the angular contact ball bearing becomes one side of the angular contact ball bearings in the axial direction, and wherein, on the anti-load side, the intersection becomes the other side of the angular contact ball bearings in the axial direction.

2. The bearing device according to claim 1, wherein the angular contact ball bearing on the load side has a bearing cross-sectional height larger than a bearing cross-sectional height of the angular contact ball bearing on the anti-load side.

3. The bearing device according to claim 1 or 2, wherein an outer ring spacer is disposed between an outer ring of the angular contact ball bearing on the load side and an outer ring of the angular contact ball bearing on the anti-load side.

4. The bearing device according to claim 1 or 2, wherein an outer ring of the angular contact ball bearing on the load side and an outer ring of the angular contact ball bearing on the anti-load side are disposed so as to allow axial end surfaces of the outer rings to contact each other.

5. The bearing device according to any one of claims 1 to 4, wherein at least one of the angular contact ball bearing on the load side and the angular contact ball bearing on the anti-load side has two or more rows of the angular contact ball bearings, and
wherein outer rings of the two or more rows of the angular contact ball bearings are disposed so as to allow axial end surfaces of the outer rings to contact each other.

6. A main spindle device for a machine tool, the main spindle device having a main spindle rotatably supported in a housing through a front side bearing and a rear side bearing,
wherein the front side bearing is configured by the bearing device according to any one of claims 1 to 5.

7. The main spindle device for a machine tool according to claim 6, wherein the angular contact ball bearing on the load side has an outer diameter dimension larger than an outer diameter dimension of the angular contact ball bearing on the anti-load side,
wherein the housing has an axial end surface formed between a large-diameter inner peripheral surface and a small-diameter inner peripheral surface, wherein the large-diameter inner peripheral surface has the outer ring of the angular contact ball bearing on the load side internally fitted thereto, and wherein the small-diameter inner peripheral surface has the outer ring of the angular contact ball bearing on the anti-load side internally fitted thereto, and
wherein the housing is positioned at and fixed to the front side bearing in a state in which the axial end surface of the outer ring of the angular contact ball bearing on the load side, or an axial end surface of the outer ring spacer disposed between the outer ring of the angular contact ball bearing on the load side and the outer ring of the angular contact ball bearing on the anti-load side, and the axial end surface of the housing are in contact with each other.

8. The main spindle device for a machine tool according to claim 6, wherein the angular contact ball bearing on the load side has an outer diameter dimension larger than an outer diameter dimension of the angular contact ball bearing on the anti-load side,
wherein the housing has an axial end surface formed between a large-diameter inner peripheral surface and a small-diameter inner peripheral surface, wherein the large-diameter inner peripheral surface has the outer ring of the angular contact ball bearing on the load side internally fitted thereto, and wherein the small-diameter inner peripheral surface has the outer ring of the angular contact ball bearing on the anti-load side internally fitted thereto, and
wherein the housing is positioned at and fixed to the front side bearing in a state in which an axial gap is provided between the axial end surface of the outer ring of the angular contact ball bearing on the load side, or an axial end surface of the outer ring spacer disposed between the outer ring of the angular contact ball bearing on the load side and the outer ring of the angular contact ball bearing on the anti-load side, and the axial end surface of the housing.

9. The main spindle device for a machine tool according to any one of claims 6 to 8, wherein the main spindle is rotationally driven by a built-in motor, and
wherein the angular contact ball bearing on the anti-load side is located closer to the built-in motor than the angular contact ball bearing on the load side.
